# EUROPEAN PATENT SPECIFICATION

(11) **EP 3 301 857 B1**
(45) Date of publication and mention of the grant of the patent: **23.03.2022**
(21) Application number: 17190390.9
(22) Date of filing: 11.09.2017
(51) Int. Cl.: H04L 12/28

(54) **PROMPTING METHOD, PROMPTING DEVICE AND PROMPTING SYSTEM**
AUFFORDERUNGSVERFAHREN, AUFFORDERUNGSVORRICHTUNG UND AUFFORDERUNGSSYSTEM
PROCÉDÉ, DISPOSITIF ET SYSTÈME D'INVITE

(30) Priority: 29.09.2016 CN 201610868518
(43) Date of publication of application: 04.04.2018
(73) Proprietor: Beijing Xiaomi Mobile Software Co., Ltd., Beijing 100085 (CN)
(72) Inventor: CHEN, Tao, Beijing 100085 (CN); LIU, Huayijun, Beijing 100085 (CN); TANG, Mingyong, Beijing 100085 (CN)
(74) Representative: dompatent von Kreisler Selting Werner - Partnerschaft von Patent- und Rechtsanwälten mbB

(56) References cited:
- EP-A1- 2 549 684
- US-A1- 2011 224 807
- US-A1- 2015 205 275
- US-A1- 2016 124 499

## Description

### TECHNICAL FIELD

The present invention generally relates to message prompting, and more particularly, to a prompting method and a prompting system.

### BACKGROUND

Along with development of sciences and technologies, Wireless Fidelity (WIFI) technologies in the Internet of things era are widely applied, and products which provide immersive experiences emerge, such as a Virtual Reality (VR) product and a headset. A user immersed in a sensual experience provided by a VR product, a headset or the like may miss important information prompt from outside.

US2015205275 discloses an information notification method in an information notification system, including: an acquiring step for acquiring today's required time which is required for traveling from a departure point to a destination included in behavior information; a determining step for determining today's departure time using the acquired today's required time and an arrival time included in the behavior information; a judging step for judging whether or not the determined today's departure time is earlier than a typical departure time included in the behavior information; a notifying step for notifying a notifying apparatus owned by the user of notification information for adjusting the behavior of the user, when it is judged that the determined today's departure time is earlier than the typical departure time; and an output step for causing the notifying apparatus to output the notified notification information.

EP2549684 discloses a device, system and method for implementing a smart home application, wherein a home gateway can always be connected with one or more terminal equipment, and can perform conversion of a message between a home control centre and the terminal equipment, and send the converted message to the home control centre or the terminal equipment; the home control centre can then execute a smart home service logic according to a received user instruction or a preconfigured task, and can further send an instruction to one or more terminal equipment through the home gateway so as to implement the smart home application through execution of the terminal equipment. With the device, system and method in the disclosure, the smart home application can be implemented based on unified control of terminal equipment.

Related technologies can also be found in US 2016/124499 A1.

### SUMMARY

Accordingly, the present invention provides a prompting method and a prompting system in accordance with claims which follow The invention is defined in the independent claims.

According to technical solutions described herewith, the notification sending equipment sends the notification information to the home gateway when receiving the notification information, and the home gateway forwards the notification information to the notification receiving equipment in the in-service state or in the immersive experience state, so that the notification receiving equipment makes a prompt about the notification information. In such a manner, when a user uses an immersive experience product, the notification information is forwarded to the immersive experience product, such as a television and/or a VR product, used by the user through the home gateway if being received by the notification sending equipment such as a washing machine or a doorbell, so that it is ensured that the user in an immersive experience may receive important prompting information on the immersive experience product, thereby preventing the user from missing the important prompting information, and improving user experiences.

It should be understood that the above general descriptions and detailed descriptions below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a prompting method for notification sending equipment according to an exemplary embodiment.
Fig. 2 is a flow chart showing Step S102 in a prompting method for notification sending equipment according to an exemplary embodiment.
Fig. 3 is a flow chart showing Step S102 in another prompting method for notification sending equipment according to an exemplary embodiment.
Fig. 4 is a flow chart showing a prompting method for a home gateway according to an exemplary embodiment.
Fig. 5 is a flow chart showing a prompting method for notification receiving equipment according to an exemplary embodiment.
Fig. 6 is a block diagram illustrating a prompting device for notification sending equipment according to an exemplary embodiment.
Fig. 7 is a block diagram illustrating a first prompting module in a prompting device for notification sending equipment according to an exemplary embodiment.
Fig. 8 is a block diagram illustrating a first prompting module in another prompting device for notification sending equipment according to an exemplary embodiment.
Fig. 9 is a block diagram illustrating a prompting device for home gateway according to an exemplary embodiment.
Fig. 10 is a block diagram illustrating a prompting device for notification receiving equipment according to an exemplary embodiment.
Fig. 11 is a block diagram illustrating a prompting system according to an exemplary embodiment.
Fig. 12 is a block diagram illustrating a prompting device according to an exemplary embodiment.
Fig. 13 is a block diagram illustrating a prompting device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

An embodiment of the present invention provides a prompting method, which may be applied to notification sending equipment, wherein the notification sending equipment may be equipment such as a washing machine, an intelligent doorbell, a kitchen appliance, an alarm or the like.

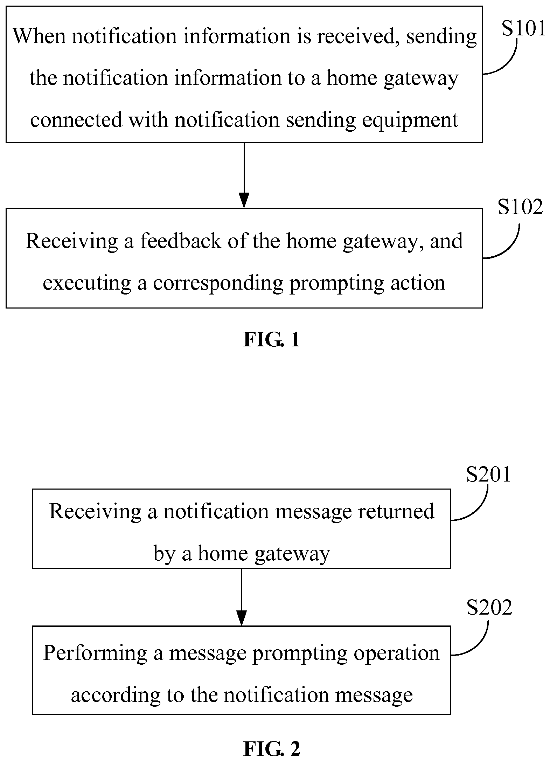

Fig. 1 is a flow chart showing a prompting method for notification sending equipment according to an exemplary embodiment.

As shown in Fig. 1, the method includes Steps S101-S102.

In Step S101, when notification information is received, sending the notification information to a home gateway connected with notification sending equipment.

When receiving the notification information, the notification sending equipment sends the notification information to the home gateway connected therewith, wherein the notification information may be that, for example, an intelligent doorbell receives a ringing notification, a washing machine receives a washing completion notification, a kitchen appliance receives a cooking completion notification and an alarm receives an alarm notification. When receiving the notification information, the notification sending equipment does not directly make a prompt, and instead, sends it to the home gateway, wherein the notification sending equipment may access the home gateway in a wired or wireless connection manner.

In Step S102, receiving a feedback of the home gateway, and executing a corresponding prompting action.

The home gateway sends the feedback to the notification sending equipment according to a state of notification receiving equipment connected to the home gateway when receiving the notification information sent by the notification sending equipment, and the notification sending equipment executes the corresponding prompting action according to the feedback of the home gateway, for example, independently making the prompt about the notification information or not making the prompt about the notification information.

Fig. 2 is a flow chart showing Step S102 in a prompting method for notification sending equipment according to an exemplary embodiment.

As shown in Fig. 2, in an embodiment, Step S102 may be implemented as Steps S201-S202.

In Step S201, receiving a notification message returned by the home gateway.

The home gateway determines whether the notification receiving equipment connected to the home gateway is in an in-service state or an immersive experience state or not when receiving the notification information, and forwards the notification information to the notification receiving equipment when the notification receiving equipment is in the in-service state or the immersive experience state, and then the notification receiving equipment makes a prompt about the prompting information. When the notification receiving equipment is not in the in-service state or the immersive experience state, the home gateway returns the notification message to the notification sending equipment, wherein the notification message may be different from the notification information, and may only be a message which causes the notification sending equipment to make the prompt. Of course, it may also be the same as the notification information, and then the notification sending equipment directly makes the prompt after receiving the notification information.

In Step S202, performing a message prompting operation according to the notification message.

In the embodiment, when the notification sending equipment receives the notification message sent by the home gateway, it is indicated that the notification receiving equipment connected to the home gateway may not make the prompt about the notification information. At this moment, the notification sending equipment performs the prompting operation on the notification information by itself, namely outputting the notification information, thereby making it convenient for the user to acquire the notification information.

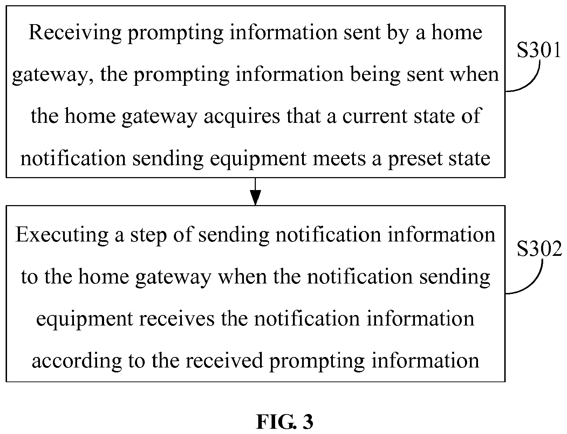

Fig. 3 is a flow chart showing Step S102 in another prompting method for notification sending equipment according to an exemplary embodiment.

As shown in Fig. 3, in an embodiment, Step S102 may further be implemented as Steps S301-S302.

In Step S301, receiving prompting information sent by the home gateway, the prompting information being sent when the home gateway acquires that a current state of the notification sending equipment meets a preset state.

The preset state includes the immersive experience state.

In the embodiment, the home gateway sends the prompting information to the notification sending equipment when acquiring that the current state of the notification receiving equipment meets the immersive experience state, thereby prompting the notification sending equipment that the user is in the immersive experience and the notification information may be sent to the notification receiving equipment for prompting to prevent the user from missing any important prompt.

In Step S302, executing the step of sending the notification information to the home gateway when the notification sending equipment receives the notification information according to the received prompting information.

After receiving the prompting message, the notification sending equipment forwards the notification information to the notification receiving equipment through the home gateway if receiving the notification information, that is, the notification information is forwarded through the home gateway only when the notification receiving equipment is in the immersive experience. Therefore, resource waste caused by continuous forwarding of the home gateway when the notification information is not required to be forwarded may be avoided, the user may be prevented from missing any important prompting information in an immersive experience process, and user experiences are improved.

An embodiment of the present invention also provides a prompting method, which is applied to a home gateway.

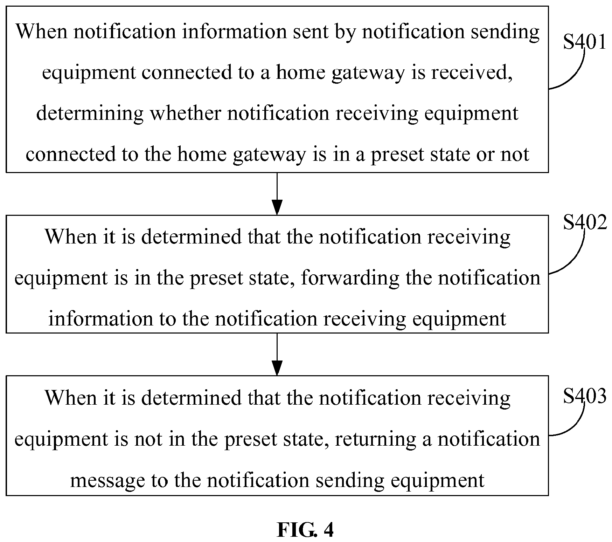

Fig. 4 is a flow chart showing a prompting method for a home gateway according to an exemplary embodiment.

As shown in Fig. 4, the method includes Steps S401-S403.

In Step S401, when notification information sent by notification sending equipment connected to the home gateway is received, determining whether notification receiving equipment connected to the home gateway is in a preset state or not.

Herein, the notification receiving equipment may also be connected to the home gateway in a wired connection or wireless connection manner. The notification receiving equipment may be a VR product, a headset, a television, a computer, a mobile phone or the like.

In Step S402, when it is determined that the notification receiving equipment is in the preset state, forwarding the notification information to the notification receiving equipment.

In an embodiment, the preset state includes an in-service state.

In the embodiment, when the notification receiving equipment is in the in-service state, the notification information received by the notification sending equipment is forwarded to the notification receiving equipment, so that the notification receiving equipment makes a prompt about the notification information. In such a manner, as long as the notification receiving equipment is in service, the notification receiving equipment makes the prompt about the notification information for a user to conveniently acquire the prompt.

Furthermore the preset state includes an immersive experience state.

In the embodiment, when the notification receiving equipment is in the immersive experience state, the notification information received by the notification sending equipment is forwarded to the notification receiving equipment, so that the notification receiving equipment makes the prompt about the notification information. In such a manner, the user in an immersive experience may be prevented from missing any external important prompt, and user experiences are improved.

Herein, when multiple pieces of notification receiving equipment are in the preset state, the notification receiving equipment with a highest priority may be selected according to equipment priorities predefined by the user, and the notification information is forwarded to the notification receiving equipment with the highest priority.

In Step S403, when it is determined that the notification receiving equipment is not in the preset state, returning a notification message to the notification sending equipment.

In the embodiment, when the notification receiving equipment is not in the in-service state or the immersive experience state, the home gateway may return the notification message to the notification sending equipment at this moment. When the notification sending equipment receives the notification message sent by the home gateway, it is indicated that the notification receiving equipment connected to the home gateway may not make the prompt about the notification information, and at this moment, the notification sending equipment performs a prompting operation on the notification information by itself, namely outputting the notification information, thereby making it convenient for the user to acquire the notification information.

An embodiment of the present invention also provides a prompting method, which is applied to notification receiving equipment. Herein the notification receiving equipment may be a VR product, a headset, a television, a computer, a mobile phone or the like.

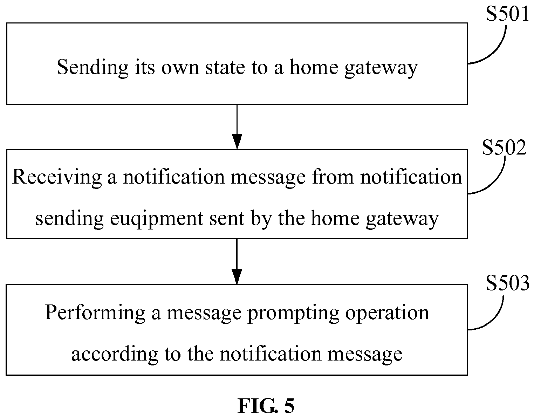

Fig. 5 is a flow chart showing a prompting method for notification receiving equipment according to an exemplary embodiment.

As shown in Fig. 5, the method includes Steps S501-S503.

In Step S501, sending its own state to a home gateway.

In an embodiment, the own state includes an in-service state or an out-of-service state.

In the embodiment, the notification receiving equipment may send its own state to the home gateway in real time, thereby making it convenient for the home gateway to determine whether to forward received notification information sent by notification sending equipment to the notification receiving equipment or not according to the state of the notification receiving equipment.

Herein, when the notification receiving equipment is in the in-service state, the home gateway may forward the notification information sent by the notification sending equipment to the notification receiving equipment, so that the notification receiving equipment makes a prompt about the notification information. In such a manner, as long as the notification receiving equipment is in service, the notification receiving equipment makes the prompt about the notification information for a user to acquire the prompt. When the notification receiving equipment is in the out-of-service state, the home gateway may return a notification message to the notification sending equipment at this moment. When the notification sending equipment receives the notification message sent by the home gateway, it is indicated that the notification receiving equipment connected to the home gateway may not make the prompt about the notification information, and at this moment, the notification sending equipment performs the prompting operation on the notification information by itself, namely outputting the notification information, thereby making it convenient for the user to acquire the notification information.

Furthermore, the own state includes an immersive experience state.

In the embodiment, when the notification receiving equipment is in the immersive experience state, the notification information received by the notification sending equipment is forwarded to the notification receiving equipment, so that the notification receiving equipment makes the prompt about the notification information. In such a manner, the user in an immersive experience may be prevented from missing any external important prompt, and user experiences are improved.

Herein, when a headset is plugged into a mobile phone, VR equipment is started and a volume of a television is higher than a certain threshold value, it may be judged that the current equipment is in the immersive experience state.

In Step S502, receiving a notification message from notification sending equipment sent by the home gateway.

In Step 503, performing a message prompting operation according to the notification message.

In the embodiment, the notification sending equipment sends the notification information to the home gateway when receiving the notification information, and the home gateway forwards the notification information to the notification receiving equipment in the in-service state or in the immersive experience state, so that the notification receiving equipment makes a prompt about the notification information. In such a manner, when the user uses an immersive experience product, the notification information may be forwarded to the immersive experience product, such as a television and a VR product, used by the user through the home gateway if being received by the notification sending equipment such as a washing machine and a doorbell, so that it is ensured that the user in the immersive experience may receive important prompting information on the immersive experience product, thereby preventing the user from missing the important prompting information, and improving user experiences.

The below is a device embodiment of the present invention, which may be configured to execute the method embodiment of the present invention.

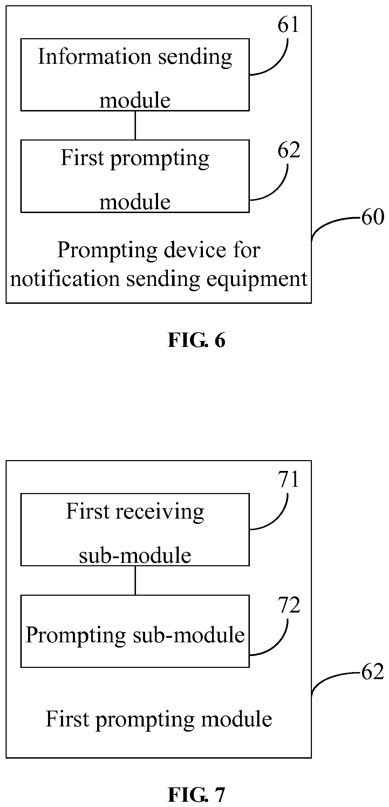

Fig. 6 is a block diagram illustrating a prompting device for notification sending equipment according to an exemplary embodiment. The device may be implemented into a part or entire of the notification sending equipment through software, hardware or a combination thereof. As shown in Fig. 6, the prompting device 60 for the notification sending equipment includes an information sending module 61 and a first prompting module 62.

The information sending module 61 is configured to, when notification information is received, send the notification information to a home gateway connected with the notification sending equipment.

When receiving the notification information, the notification sending equipment sends the notification information to the home gateway connected therewith. Herein the notification information may be that, for example, an intelligent doorbell receives a ringing notification, a washing machine receives a washing completion notification, a kitchen appliance receives a cooking completion notification and an alarm receives an alarm notification. When receiving the notification information, the notification sending equipment does not directly make a prompt, and instead, sends it to the home gateway. Herein the notification sending equipment may access the home gateway in a wired or wireless connection manner.

The first prompting module 62 is configured to receive a feedback of the home gateway and execute a corresponding prompting action.

The home gateway may send the feedback to the notification sending equipment according to a state of notification receiving equipment connected to the home gateway when receiving the notification information sent by the notification sending equipment, and the notification sending equipment may execute the corresponding prompting action according to the feedback of the home gateway, for example, independently making the prompt about the notification information or not making the prompt about the notification information.

Fig. 7 is a block diagram illustrating a first prompting module in a prompting device for notification sending equipment according to an exemplary embodiment.

As shown in Fig. 7, in an embodiment, the first prompting module 62 in the prompting device for the notification sending equipment shown in Fig. 6 includes a first receiving sub-module 71 and a prompting sub-module 72.

The first receiving sub-module 71 is configured to receive a notification message returned by the home gateway.

The home gateway determines whether the notification receiving equipment connected to the home gateway is in an in-service state or an immersive experience state or not when receiving the notification information, and forwards the notification information to the notification receiving equipment when the notification receiving equipment is in the in-service state or the immersive experience state. Then, the notification receiving equipment makes a prompt about the prompting information. When the notification receiving equipment is not in the in-service state or the immersive experience state, the home gateway returns the notification message to the notification sending equipment. Herein the notification message may be different from the notification information, and may only be a message which causes the notification sending equipment to make the prompt. Of course, it may also be the same as the notification information, and then the notification sending equipment directly makes the prompt after receiving the notification information.

The prompting sub-module 72 is configured to perform a message prompting operation according to the notification message received by the first receiving sub-module 71.

In the embodiment, when the notification sending equipment receives the notification message sent by the home gateway, it is indicated that the notification receiving equipment connected to the home gateway may not make the prompt about the notification information, and at this moment, the notification sending equipment performs the prompting operation on the notification information by itself, namely outputting the notification information, thereby making it convenient for the user to acquire the notification information.

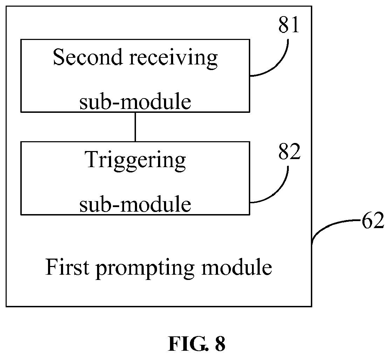

Fig. 8 is a block diagram illustrating a first prompting module in another prompting device for notification sending equipment according to an exemplary embodiment.

As shown in Fig. 8, in an embodiment, the first prompting module 62 in the prompting device for the notification sending equipment shown in Fig. 6 includes a second receiving sub-module 81 and a triggering sub-module 82.

The second receiving sub-module 81 is configured to receive prompting information sent by the home gateway, the prompting information being sent when the home gateway acquires that a current state of the notification sending equipment meets a preset state.

The preset state includes the immersive experience state.

In the embodiment, the home gateway may send the prompting information to the notification sending equipment when acquiring that the current state of the notification receiving equipment meets the immersive experience state, thereby prompting the notification sending equipment that the user is in the immersive experience and the notification information may be sent to the notification receiving equipment for prompting to prevent the user from missing any important prompt.

The triggering sub-module 82 is configured to trigger the information sending module 61 according to the prompting information received by the second receiving sub-module 81.

After receiving the prompting message, the notification sending equipment forwards the notification information to the notification receiving equipment through the home gateway if receiving the notification information. That is, the notification information is forwarded through the home gateway only when the notification receiving equipment is in the immersive experience. Therefore, resource waste caused by continuous forwarding of the home gateway when the notification information is not required to be forwarded may be avoided, the user may be prevented from missing any important prompting information in an immersive experience process, and user experiences are improved.

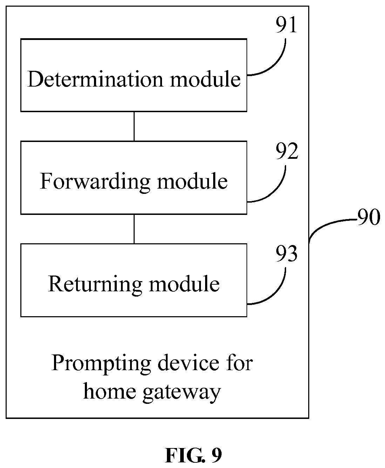

Fig. 9 is a block diagram illustrating a prompting device for a home gateway according to an exemplary embodiment. The device may be implemented into a part or entire of the home gateway through software, hardware or a combination thereof. As shown in Fig. 9, the prompting device 90 for the home gateway includes a determination module 91, a forwarding module 92 and a returning module 93.

The determination module 91 configured to, when notification information sent by notification sending equipment connected to the home gateway is received, determine whether notification receiving equipment connected to the home gateway is in a preset state or not.

Herein, the notification receiving equipment may also be connected to the home gateway in a wired connection or wireless connection manner. The notification receiving equipment may be a VR product, a headset, a television, a computer, a mobile phone or the like.

The forwarding module 92 is configured to, when the determination module 91 determines that the notification receiving equipment is in the preset state, forward the notification information to the notification receiving equipment.

In an embodiment, the preset state includes an in-service state.

In the embodiment, when the notification receiving equipment is in the in-service state, the notification information received by the notification sending equipment may be forwarded to the notification receiving equipment, so that the notification receiving equipment makes a prompt about the notification information. In such a manner, as long as the notification receiving equipment is in service, the notification receiving equipment makes a prompt about the notification information for a user to conveniently acquire the prompt.

Furthermore, the preset state includes an immersive experience state.

In the embodiment, when the notification receiving equipment is in the immersive experience state, the notification information received by the notification sending equipment is forwarded to the notification receiving equipment, so that the notification receiving equipment makes the prompt about the notification information. In such a manner, the user in an immersive experience may be prevented from missing any external important prompt, and user experiences are improved.

Herein, when multiple pieces of notification receiving equipment are in the preset state, the notification receiving equipment with a highest priority may be selected according to equipment priorities predefined by the user, and the notification information is forwarded to the notification receiving equipment with the highest priority.

The returning module 93 is configured to, when the determination module 91 determines that the notification receiving equipment is not in the preset state, return a notification message to the notification sending equipment.

In the embodiment, when the notification receiving equipment is not in the in-service state or the immersive experience state, the home gateway may return the notification message to the notification sending equipment at this moment, when the notification sending equipment receives the notification message sent by the home gateway, it is indicated that the notification receiving equipment connected to the home gateway may not make the prompt about the notification information, and at this moment, the notification sending equipment performs a prompting operation on the notification information by itself, namely outputting the notification information, thereby making it convenient for the user to acquire the notification information.

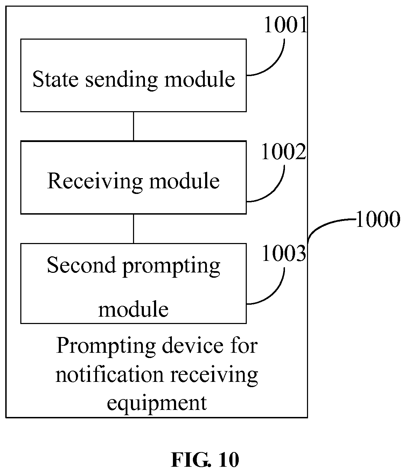

Fig. 10 is a block diagram illustrating a prompting device for notification receiving equipment according to an exemplary embodiment. The device may be implemented into a part or entire of the notification receiving equipment through software, hardware or a combination thereof. As shown in Fig. 10, the prompting device 1000 for the notification receiving equipment includes a state sending module 1001, a receiving module 1002 and a second prompting module 1003.

The state sending module 1001 is configured to send its own state to a home gateway.

In an embodiment, the own state includes an in-service state or an out-of-service state.

In the embodiment, the notification receiving equipment may send its own state to the home gateway in real time, thereby making it convenient for the home gateway to determine whether to forward received notification information sent by notification sending equipment to the notification receiving equipment or not according to the state of the notification receiving equipment.

Herein, when the notification receiving equipment is in the in-service state, the home gateway may forward the notification information sent by the notification sending equipment to the notification receiving equipment, so that the notification receiving equipment makes a prompt about the notification information. In such a manner, as long as the notification receiving equipment is in service, the notification receiving equipment makes the prompt about the notification information for a user to acquire the prompt. When the notification receiving equipment is in the out-of-service state, the home gateway may return a notification message to the notification sending equipment at this moment, when the notification sending equipment receives the notification message sent by the home gateway, it is indicated that the notification receiving equipment connected to the home gateway may not make the prompt about the notification information, and at this moment, the notification sending equipment performs the prompting operation on the notification information by itself, namely outputting the notification information, thereby making it convenient for the user to acquire the notification information.

Furthermore, the own state includes an immersive experience state.

In the embodiment, when the notification receiving equipment is in the immersive experience state, the notification information received by the notification sending equipment is forwarded to the notification receiving equipment, so that the notification receiving equipment makes the prompt about the notification information. In such a manner, the user in an immersive experience may be prevented from missing any external important prompt, and user experiences are improved.

Herein, when a headset is plugged into a mobile phone, VR equipment is started and a volume of a television is higher than a certain threshold value, it may be judged that the current equipment is in the immersive experience state.

The receiving module 1002 is configured to receive a notification message from notification sending equipment sent by the home gateway.

The second prompting module 1003 is configured to perform a message prompting operation according to the notification message received by the receiving module 1002.

In the embodiment, the notification sending equipment sends the notification information to the home gateway when receiving the notification information, and the home gateway forwards the notification information to the notification receiving equipment in the in-service state or in the immersive experience state, so that the notification receiving equipment makes a prompt about the notification information. In such a manner, when the user uses an immersive experience product, the notification information may be forwarded to the immersive experience product, such as a television and a VR product, used by the user through the home gateway if being received by the notification sending equipment such as a washing machine and a doorbell, so that it is ensured that the user in the immersive experience may receive important prompting information on the immersive experience product, thereby preventing the user from missing the important prompting information, and improving user experiences.

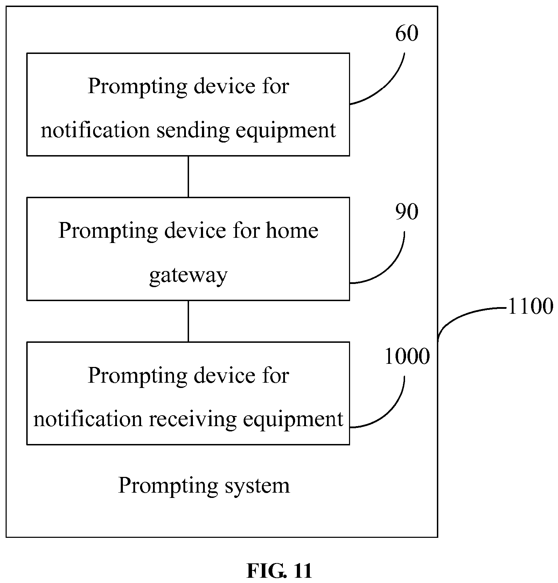

Fig. 11 is a block diagram illustrating a prompting system according to an exemplary embodiment.

As shown in Fig. 11, the prompting system 1100 includes a prompting device 60 for notification sending equipment, a prompting device 90 for a home gateway and a prompting device 1000 for notification receiving equipment.

The notification sending equipment sends notification information to the home gateway when receiving the notification information, and the home gateway forwards the notification information to the notification receiving equipment in an in-service state or in an immersive experience state, so that the notification receiving equipment makes a prompt about the notification information. In such a manner, when a user uses an immersive experience product, the notification information may be forwarded to the immersive experience product, such as a television and a VR product, used by the user through the home gateway if being received by the notification sending equipment such as a washing machine and a doorbell, so that it is ensured that the user in an immersive experience may receive important prompting information on the immersive experience product, thereby preventing the user from missing the important prompting information, and improving user experiences.

According to a seventh aspect of the embodiments of the present invention, a prompting device is provided, which is applied to notification sending equipment and includes:
a processor; and
a memory configured to store instructions executable by the processor,
wherein the processor is configured to:
when notification information is received, send the notification information to a home gateway connected with the notification sending equipment; and
receive a feedback of the home gateway and execute a corresponding prompting action.

The processor may further be configured to:
receive a notification message returned by the home gateway; and
perform a message prompting operation according to the notification message.
The processor may further be configured to:
receive prompting information sent by the home gateway, the prompting information being sent when the home gateway acquires that a current state of the notification sending equipment meets a preset state; and
execute the step of sending the notification information to the home gateway when the notification sending equipment receives the notification information according to the received prompting information.

The preset state includes an immersive experience state.

According to an eighth aspect of the embodiments of the present invention, a prompting device is provided, which is applied to a home gateway and includes:
a processor; and
a memory configured to store instructions executable by the processor,
wherein the processor is configured to:
when notification information sent by notification sending equipment connected to the home gateway is received, determine whether notification receiving equipment connected to the home gateway is in a preset state or not;
when it is determined that the notification receiving equipment is in the preset state, forward the notification information to the notification receiving equipment; and
when it is determined that the notification receiving equipment is not in the preset state, return a notification message to the notification sending equipment.

The preset state includes an in-service state.

The preset state includes an immersive experience state.

According to a ninth aspect of the embodiments of the present invention, a prompting device is provided, which is applied to notification receiving equipment and includes:
a processor; and
a memory configured to store instructions executable by the processor,
wherein the processor is configured to:
send its own state to a home gateway;
receive a notification message sent by the home gateway from notification sending equipment; and
perform a message prompting operation according to the notification message.

The own state includes an in-service state or an out-of-service state.

The own state includes an immersive experience state.

According to a tenth aspect of the embodiments of the present invention, a prompting system is provided, which includes:
the notification sending equipment mentioned in the seventh aspect;
the home gateway mentioned in the eighth aspect; and
the notification receiving equipment mentioned in the ninth aspect.

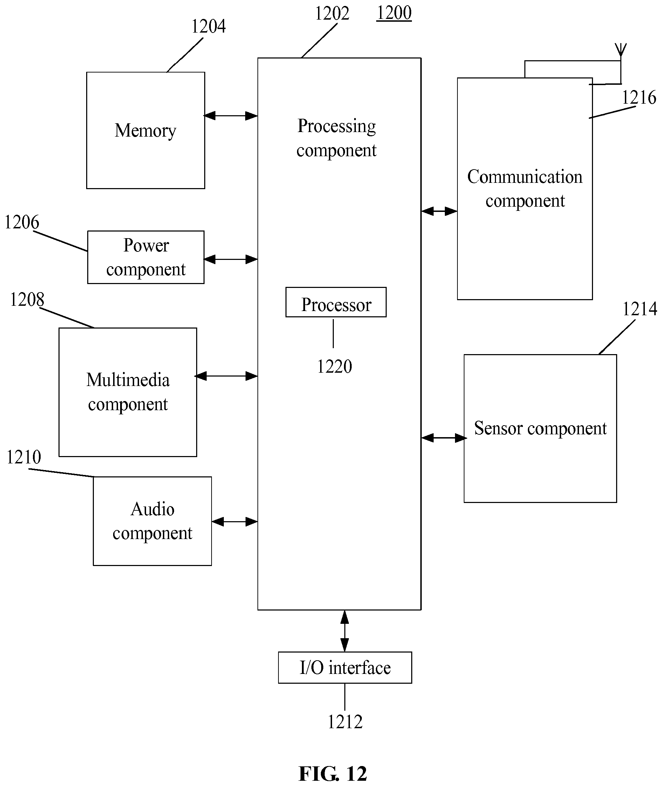

Fig. 12 is a block diagram illustrating a prompting device according to an exemplary embodiment. The device is applicable to notification sending equipment and notification receiving equipment. For example, the device 1200 may be a mobile phone, a computer, a digital broadcast terminal, a messaging device, a gaming console, a tablet, a medical device, exercise equipment, a personal digital assistant or the like.

The device 1200 may include one or more of the following components: a processing component 1202, a memory 1204, a power component 1206, a multimedia component 1208, an audio component 1210, an Input/Output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the abovementioned method. Moreover, the processing component 1202 may include one or more modules which facilitate interaction between the processing component 1202 and the other components. For instance, the processing component 1202 may include a multimedia module to facilitate interaction between the multimedia component 1208 and the processing component 1202.

The memory 1204 is configured to store various types of data to support the operation of the device 1200. Examples of such data include instructions for any application programs or methods operated on the device 1200, contact data, phonebook data, messages, pictures, video, etc. The memory 1204 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1206 provides power for various components of the device 1200. The power component 1206 may include a power management system, one or more power supplies, and other components associated with the generation, management and distribution of power for the device 1200.

The multimedia component 1208 includes a screen providing an output interface between the device 1200 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1208 includes a front camera and/or a rear camera. The front camera and/or the rear camera may receive external multimedia data when the device 1200 is in an operation mode, such as a photographing mode or a video mode. Each of the front camera and the rear camera may be a fixed optical lens system or have focusing and optical zooming capabilities.

The audio component 1210 is configured to output and/or input an audio signal. For example, the audio component 1210 includes a Microphone (MIC), and the MIC is configured to receive an external audio signal when the device 1200 is in the operation mode, such as a call mode, a recording mode and a voice recognition mode. The received audio signal may be further stored in the memory 1204 or sent through the communication component 1216. In some embodiments, the audio component 1210 further includes a speaker configured to output the audio signal.

The I/O interface 1212 provides an interface between the processing component 1202 and a peripheral interface module, and the peripheral interface module may be a keyboard, a click wheel, a button or the like. The button may include, but not limited to: a home button, a volume button, a starting button and a locking button.

The sensor component 1214 includes one or more sensors configured to provide status assessment in various aspects for the device 1200. For instance, the sensor component 1214 may detect an on/off status of the device 500 and relative positioning of components, such as a display and small keyboard of the device 1200, and the sensor component 1214 may further detect a change in a position of the device 1200 or a component of the device 1200, presence or absence of contact between the user and the device 1200, orientation or acceleration/deceleration of the device 1200 and a change in temperature of the device 1200. The sensor component 1214 may include a proximity sensor configured to detect presence of an object nearby without any physical contact. The sensor component 1214 may also include a light sensor, such as a Complementary Metal Oxide Semiconductor (CMOS) or Charge Coupled Device (CCD) image sensor, configured for use in an imaging application. In some embodiments, the sensor component 1214 may also include an acceleration sensor, a gyroscope sensor, a magnetic sensor, a pressure sensor or a temperature sensor.

The communication component 1216 is configured to facilitate wired or wireless communication between the device 1200 and another device. The device 1200 may access a communication-standard-based wireless network, such as a WIFI network, a 2nd-Generation (2G) or 3rd-Generation (3G) network or a combination thereof. In an exemplary embodiment, the communication component 1216 receives a broadcast signal or broadcast associated information from an external broadcast management system through a broadcast channel. In an exemplary embodiment, the communication component 1216 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and another technology.

In an exemplary embodiment, the device 1200 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1204 including an instruction, and the instruction may be executed by the processor 1220 of the device 1200 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device or the like.

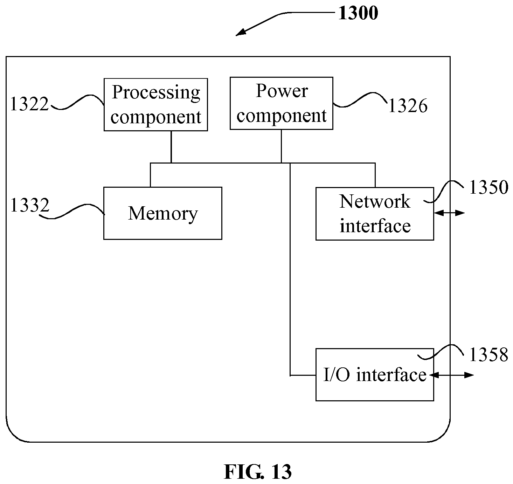

Fig. 13 is a block diagram illustrating a prompting device according to an exemplary embodiment. The device 1300 is provided as a home gateway. The device 1300 includes a proceessing component 1322, further including one or more processors, and a memory resource represented by a memory 1332, configured to store instructions executable by the processing component 1322, such as application programs. The application programs stored in the memory 1332 may include one or more than one module of which each corresponds to a set of instructions. In addition, the processing component 1322 is configured to execute the instructions, so as to execute the abovementioned method.

The device 1300 may further include a power component 1326 configured to execute power mangement of the device 1300, a wired or wireless network interface 1350 configured to connect the device 1300 to a network, and an I/O interface 1358. The device 1300 may be operated on the basis of an operating system stored in the memory 1332, such as Windows ServerTM, Mac OS XTM, UnixTM, LinuxTM or FreeBSDTM.

A non-transitory computer-readable storage medium is provided, and instructions in the storage medium are executed by a processor of the device 1200 to enable the device 1200 to execute the abovementioned prompting method, the method including:
when notification information is received, sending the notification information to a home gateway connected with notification sending equipment; and
receiving a feedback of the home gateway, and executing a corresponding prompting action.
In an embodiment, receiving the feedback of the home gateway and executing the corresponding prompting action includes:
receiving a notification message returned by the home gateway; and
performing a message prompting operation according to the notification message.

In an embodiment, receiving the feedback of the home gateway and executing the corresponding prompting action includes:
receiving prompting information sent by the home gateway, the prompting information being sent when the home gateway acquires that a current state of the notification sending equipment meets a preset state; and
executing the step of sending the notification information to the home gateway when the notification sending equipment receives the notification information according to the received prompting information.

In an embodiment, the preset state includes an immersive experience state.

A non-transitory computer-readable storage medium is provided, and instructions in the storage medium are executed by a processor of the device 1200 to enable the device 1200 to execute the abovementioned prompting method, the method including:
sending own state to a home gateway;
receiving a notification message sent by the home gateway from notification sending equipment; and
performing a message prompting operation according to the notification message.

In an embodiment, the own state includes an in-service state or an out-of-service state.

In an embodiment, the own state includes an immersive experience state.

A non-transitory computer-readable storage medium is provided, and instructions in the storage medium are executed by a processor of the device 1300 to enable the device 1300 to execute the abovementioned prompting method, the method including:
when notification information sent by notification sending equipment connected to a home gateway is received, determining whether notification receiving equipment connected to the home gateway is in a preset state or not;
when it is determined that the notification receiving equipment is in the preset state, forwarding the notification information to the notification receiving equipment; and
when it is determined that the notification receiving equipment is not in the preset state, returning a notification message to the notification sending equipment.

In an embodiment, the preset state includes an in-service state.

In an embodiment, the preset state includes an immersive experience state.

Other embodiments of the present invention will be apparent to those skilled in the art from consideration of the specification and practice of the present invention.

It will be appreciated that the present invention is not limited to the exact construction that has been described above and illustrated in the accompanying drawings, and that various modifications and changes may be made within the scope of the appended claims.

It is intended that the scope of the present invention only be limited by the appended claims.

## Claims

1. A prompting method, applied to a prompting system and comprising:
sending (S101), by a notification sending equipment, notification information to a home gateway connected with the notification sending equipment when the notification information is received; and **characterized by**
determining (S401), by the home gateway, whether notification receiving equipment connected to the home gateway is in an immersive experience state when notification information sent by the notification sending equipment is received,
wherein the immersive experience state would cause a user of the notification receiving equipment miss a prompt issued by the notification sending equipment;
when it is determined that the notification receiving equipment is in the immersive experience state, forwarding (S402), by the home gateway, the notification information to the notification receiving equipment, and performing (S503), by the notification receiving equipment, a message prompting operation according to the notification information;
when it is determined that the notification receiving equipment is not in the immersive experience state, returning (S403), by the home gateway, a notification message to the notification sending equipment, and performing, by the notification sending equipment, the message prompting operation according to the notification message.

2. The method of claim 1, wherein the method further comprises:
receiving (S301), by the notification sending equipment, prompting information sent by the home gateway, the prompting information being sent when the home gateway acquires that a current state of the notification receiving equipment meets the immersive experience state; and
triggering to execute (S302), according to the received prompting information, the step of sending the notification information to the
home gateway when the notification sending equipment receives the notification information.

3. The method of claim 1, wherein the method further comprises:
receiving, by the notification sending equipment, the notification message sent by the home gateway when the home gateway determines that notification receiving equipment is not in the immersive experience state.

4. The method of claim 1, wherein the method further comprises::
sending (S501), by the notification receiving equipment, a state of the notification receiving equipment to the home gateway, wherein the state of the notification receiving equipment comprises the immersive experience state or an out of service state, ;
receiving (S502), by the notification receiving equipment, the notification information from notification sending equipment sent by the home gateway when the state of the notification receiving equipment comprises the immersive experience state.

5. A prompting system (1100), **characterized by** comprising: notification sending equipment, a home gateway and notification receiving equipment, wherein
the notification sending equipment is configured to send notification information to the home gateway connected with the notification sending equipment when the notification information is received; and **characterized by**
the home gateway is configured to determine whether the notification receiving equipment connected to the home gateway is in an immersive experience state when notification information sent by the notification sending equipment is received, wherein the immersive experience state would cause a user of the notification receiving equipment miss a prompt issued by the notification sending equipment; when it is determined that the notification receiving equipment is in the immersive experience state, the home gateway is further configured to forward the notification information to the notification receiving equipment, and the notification receiving equipment is further configured to perform a message prompting operation according to the notification information;
when it is determined that the notification receiving equipment is not in the immersive experience state, the home gateway is further configured to return a notification message to the notification sending equipment, and the notification sending equipment is further configured to perform the message prompting operation according to the notification message.

6. The system of claim 5, wherein the notification sending equipment is further configured to:
receive prompting information sent by the home gateway, the prompting information being sent when the home gateway acquires that a current state of the notification receiving equipment meets the immersive experience state; and
trigger to execute (S302), according to the received prompting information, the step of sending the notification information to the home gateway when the notification sending equipment receives the notification information.

7. The system of claim 5, wherein the notification sending equipment is further configured to:
receive the notification message sent by the home gateway when the home gateway determines that notification receiving equipment is not in the immersive experience state.

8. The system of claim 5, wherein the notification receiving equipment is further configured to:
send a state of the notification receiving equipment to the home gateway, wherein
the state of the notification receiving equipment comprises the immersive experience state or an out of service state;
receive the notification information from notification sending equipment sent by the home gateway when the state of the notification receiving equipment comprises the immersive experience state.

## Patentansprüche

1. Aufforderungsverfahren, das bei einem Aufforderungssystem angewendet wird und umfasst:
Senden (S104), durch eine Benachrichtigungssendeeinrichtung, von Benachrichtigungsinformationen zu einem Home-Gateway, das mit der Benachrichtigungssendeeinrichtung verbunden ist, wenn die Benachrichtigungsinformationen empfangen werden; und **gekennzeichnet durch**:
Bestimmen (S401), durch das Home-Gateway, ob eine Benachrichtigungsempfangseinrichtung, die mit dem Home-Gateway verbunden ist, in einem Realistische-Erfahrung-Zustand ist, wenn von der Benachrichtigungssendeeinrichtung gesendete Benachrichtigungsinformationen empfangen werden,
wobei der Realistische-Erfahrung-Zustand bewirken würde, dass ein Benutzer der Benachrichtigungsempfangseinrichtung eine von der Benachrichtigungssendeeinrichtung ausgegebene Benachrichtigung nicht bekommt;
wenn bestimmt wird, dass die Benachrichtigungsempfangseinrichtung im Realistische-Erfahrung-Zustand ist, Weiterleiten (S402), durch das Home-Gateway, der Benachrichtigungsinformationen zu der Benachrichtigungsempfangseinrichtung und Durchführen (S503), durch die Benachrichtigungsempfangseinrichtung, einer Mitteilungsaufforderungsoperation gemäß den Benachrichtigungsinformationen;
wenn bestimmt wird, dass die Benachrichtigungsempfangseinrichtung nicht im Realistische-Erfahrung-Zustand ist, Zurückschicken (S403), durch das Home-Gateway, einer Benachrichtigungsmitteilung zu der Benachrichtigungssendeeinrichtung und Durchführen, durch die Benachrichtigungssendeeinrichtung, der Mitteilungsaufforderungsoperation gemäß der Benachrichtigungsmitteilung.

2. Verfahren nach Anspruch 1, wobei das Verfahren ferner umfasst:
Empfangen (S301), durch die Benachrichtigungssendeeinrichtung, von von dem Home-Gateway gesendeten Aufforderungsinformationen, wobei die Aufforderungsinformationen gesendet werden, wenn das Home-Gateway erfasst, dass ein aktueller Zustand der Benachrichtigungsempfangseinrichtung den Realistische-Erfahrung-Zustand erfüllt; und
Auslösen der Ausführung (S302), gemäß den empfangenen Aufforderungsinformationen, des Schritts des Sendens der Benachrichtigungsinformationen zu dem Home-Gateway, wenn die Benachrichtigungssendeeinrichtung die Benachrichtigungsinformationen empfängt.

3. Verfahren nach Anspruch 1, wobei das Verfahren ferner umfasst:
Empfangen, durch die Benachrichtigungssendeeinrichtung, der von dem Home-Gateway gesendeten Benachrichtigungsmitteilung, wenn das Home-Gateway bestimmt, dass die Benachrichtigungsempfangseinrichtung nicht im Realistische-Erfahrung-Zustand ist.

4. Verfahren nach Anspruch 1, wobei das Verfahren ferner umfasst:
Senden (S501), durch die Benachrichtigungsempfangseinrichtung, eines Zustands der Benachrichtigungsempfangseinrichtung zu dem Home-Gateway, wobei der Zustand der Benachrichtigungsempfangseinrichtung den Realistische-Erfahrung-Zustand oder einen Außerbetrieb-Zustand umfasst;
Empfangen (S502), durch die Benachrichtigungsempfangseinrichtung, der von dem Home-Gateway gesendeten Benachrichtigungsinformationen von der Benachrichtigungssendeeinrichtung, wenn der Zustand der Benachrichtigungsempfangseinrichtung den Realistische-Erfahrung-Zustand umfasst.

5. Aufforderungssystem (1100), **dadurch gekennzeichnet, dass** es aufweist:
eine Benachrichtigungssendeeinrichtung, ein Home-Gateway und eine Benachrichtigungsempfangseinrichtung, wobei die Benachrichtigungssendeeinrichtung ausgebildet ist zum Senden von Benachrichtigungsinformationen zu dem Home-Gateway, das mit der Benachrichtigungssendeeinrichtung verbunden ist, wenn die Benachrichtigungsinformationen empfangen werden; und **gekennzeichnet durch**:
das Home-Gateway, das ausgebildet ist zum Bestimmen, ob die Benachrichtigungsempfangseinrichtung, die mit dem Home-Gateway verbunden ist, in einem Realistische-Erfahrung-Zustand ist, wenn von der Benachrichtigungssendeeinrichtung gesendete Benachrichtigungsinformationen empfangen werden, wobei der Realistische-Erfahrung-Zustand bewirken würden, dass ein Benutzer der Benachrichtigungsempfangseinrichtung eine von der Benachrichtigungssendeeinrichtung ausgegebene Benachrichtigung nicht bekommt;
wenn bestimmt wird, dass die Benachrichtigungsempfangseinrichtung im Realistische-Erfahrung-Zustand ist, das Home-Gateway ferner ausgebildet ist zum Weiterleiten der Benachrichtigungsinformationen zu der Benachrichtigungsempfangseinrichtung, und die Benachrichtigungsempfangseinrichtung ferner ausgebildet ist zum Durchführen einer Mitteilungsaufforderungsoperation gemäß den Benachrichtigungsinformationen;
wenn bestimmt wird, dass die Benachrichtigungsempfangseinrichtung nicht im Realistische-Erfahrung-Zustand ist, das Home-Gateway ferner ausgebildet ist zum Zurückschicken einer Benachrichtigungsmitteilung zu der Benachrichtigungssendeeinrichtung und die Benachrichtigungssendeeinrichtung ferner ausgebildet ist zum Durchführen der Mitteilungsaufforderungsoperation gemäß der Benachrichtigungsmitteilung.

6. System nach Anspruch 5, bei dem die Benachrichtigungssendeeinrichtung ferner ausgebildet ist zum:
Empfangen von von dem Home-Gateway gesendeten Aufforderungsinformationen, wobei die Aufforderungsinformationen gesendet werden, wenn das Home-Gateway erfasst, dass ein aktueller Zustand der Benachrichtigungsempfangseinrichtung den Realistische-Erfahrung-Zustand erfüllt; und
Auslösen der Ausführung (S302), gemäß den empfangenen Aufforderungsinformationen, des Schritts des Sendens der Benachrichtigungsinformationen zu dem Home-Gateway, wenn die Benachrichtigungssendeeinrichtung die Benachrichtigungsinformationen empfängt.

7. System nach Anspruch 5, bei dem die Benachrichtigungssendeeinrichtung ferner ausgebildet ist zum:
Empfangen der von dem Home-Gateway gesendeten Benachrichtigungsmitteilung, wenn das Home-Gateway bestimmt, dass die Benachrichtigungsempfangseinrichtung nicht im Realistische-Erfahrung-Zustand ist.

8. System nach Anspruch 5, bei dem die Benachrichtigungsempfangseinrichtung ferner ausgebildet ist zum:
Senden eines Zustands der Benachrichtigungsempfangseinrichtung zu dem Home-Gateway, wobei der Zustand der Benachrichtigungsempfangseinrichtung den Realistische-Erfahrung-Zustand oder einen Außerbetrieb-Zustand umfasst;
Empfangen der von dem Home-Gateway gesendeten Benachrichtigungsinformationen von der Benachrichtigungssendeeinrichtung, wenn der Zustand der Benachrichtigungsempfangseinrichtung den Realistische-Erfahrung-Zustand umfasst.

## Revendications

1. Procédé d'invite, appliqué à un système d'invite et comprenant :
l'envoi (S101), par un équipement d'envoi de notification, d'informations de notification à une passerelle domestique connectée à l'équipement d'envoi de notification lorsque les informations de notification sont reçues ; et **caractérisé par**
la détermination (S401), par la passerelle domestique, du fait de savoir si l'équipement de réception de notification connecté à la passerelle domestique est dans un état d'expérience immersive lorsque des informations de notification envoyées par l'équipement d'envoi de notification sont reçues, dans lequel l'état d'expérience immersive amènerait un utilisateur de l'équipement de réception de notification à manquer une invite émise par l'équipement d'envoi de notification ;
lorsqu'il est déterminé que l'équipement de réception de notification est dans l'état d'expérience immersive, le transfert (S402), par la passerelle domestique, des informations de notification à l'équipement de réception de notification, et l'exécution (S503), par l'équipement de réception de notification, d'une opération d'invite de message selon les informations de notification ;
lorsqu'il est déterminé que l'équipement de réception de notification n'est pas dans l'état d'expérience immersive, le renvoi (S403), par la passerelle domestique, d'un message de notification à l'équipement d'envoi de notification, et l'exécution, par l'équipement d'envoi de notification, de l'opération d'invite de message selon le message de notification.

2. Procédé selon la revendication 1, dans lequel le procédé comprend en outre :
la réception (S301), par l'équipement d'envoi de notification, d'informations d'invite envoyées par la passerelle domestique, les informations d'invite étant envoyées lorsque la passerelle domestique acquiert qu'un état actuel de l'équipement de réception de notification satisfait à l'état d'expérience immersive ; et
le déclenchement pour exécuter (S302), selon les informations d'invite reçues, l'étape d'envoi des informations de notification à la passerelle domestique lorsque l'équipement d'envoi de notification reçoit les informations de notification.

3. Procédé selon la revendication 1, dans lequel le procédé comprend en outre :
la réception, par l'équipement d'envoi de notification, du message de notification envoyé par la passerelle domestique lorsque la passerelle domestique détermine que l'équipement de réception de notification n'est pas dans l'état d'expérience immersive.

4. Procédé selon la revendication 1, dans lequel le procédé comprend en outre :
l'envoi (S501), par l'équipement de réception de notification, d'un état de l'équipement de réception de notification à la passerelle domestique, dans lequel l'état de l'équipement de réception de notification comprend l'état d'expérience immersive ou un état hors service ;
la réception (S502), par l'équipement de réception de notification, des informations de notification provenant de l'équipement d'envoi de notification envoyées par la passerelle domestique lorsque l'état de l'équipement de réception de notification comprend l'état d'expérience immersive.

5. Système d'invite (1100), **caractérisé en ce qu'**il comprend : un équipement d'envoi de notification, une passerelle domestique et un équipement de réception de notification, dans lequel
l'équipement d'envoi de notification est configuré pour envoyer des informations de notification à la passerelle domestique connectée à l'équipement d'envoi de notification lorsque les informations de notification sont reçues ; et **caractérisé en ce que**
la passerelle domestique est configurée pour déterminer si l'équipement de réception de notification connecté à la passerelle domestique est dans un état d'expérience immersive lorsque des informations de notification envoyées par l'équipement d'envoi de notification sont reçues, dans lequel l'état d'expérience immersive amènerait un utilisateur de l'équipement de réception de notification à manquer une invite émise par l'équipement d'envoi de notification ;
lorsqu'il est déterminé que l'équipement de réception de notification est dans l'état d'expérience immersive, la passerelle domestique est en outre configurée pour transférer les informations de notification à l'équipement de réception de notification, et l'équipement de réception de notification est en outre configuré pour exécuter une opération d'invite de message selon les informations de notification ;
lorsqu'il est déterminé que l'équipement de réception de notification n'est pas dans l'état d'expérience immersive, la passerelle domestique est en outre configurée pour renvoyer un message de notification à l'équipement d'envoi de notification, et l'équipement d'envoi de notification est en outre configuré pour exécuter l'opération d'invite de message selon le message de notification.

6. Système selon la revendication 5, dans lequel l'équipement d'envoi de notification est en outre configuré pour :
recevoir des informations d'invite envoyées par la passerelle domestique, les informations d'invite étant envoyées lorsque la passerelle domestique acquiert qu'un état actuel de l'équipement de réception de notification satisfait à l'état d'expérience immersive ; et
déclencher pour exécuter (S302), selon les informations d'invite reçues, l'étape d'envoi des informations de notification à la passerelle domestique lorsque l'équipement d'envoi de notification reçoit les informations de notification.

7. Système selon la revendication 5, dans lequel l'équipement d'envoi de notification est en outre configuré pour :
recevoir le message de notification envoyé par la passerelle domestique lorsque la passerelle domestique détermine que l'équipement de réception de notification n'est pas dans l'état d'expérience immersive.

8. Système selon la revendication 5, dans lequel l'équipement de réception de notification est en outre configuré pour :
envoyer un état de l'équipement de réception de notification à la passerelle domestique, dans lequel l'état de l'équipement de réception de notification comprend l'état d'expérience immersive ou un état hors service ;
recevoir les informations de notification provenant de l'équipement d'envoi de notification envoyées par la passerelle domestique lorsque l'état de l'équipement de réception de notification comprend l'état d'expérience immersive.
